# FASCICULE DE BREVET EUROPEEN

(11) **EP 0 876 217 B1**
(45) Date de publication et mention de la délivrance du brevet: **15.10.2003**
(21) Numéro de dépôt: 96942426.6
(22) Date de dépôt: 18.12.1996
(51) Int. Cl.: B01J 37/34, B01J 31/24

(54) **PROCEDE DE PREPARATION ELECTROCHIMIQUE DE CATALYSEURS A BASE DE METAL DE TRANSITION ET DE PHOSPHINE**
VERFAHREN ZUR ELEKTROCHEMISCHEN HERSTELLUNG VON ÜBERGANGSMETALL UND PHOSPHIN ENTHALTENDE KATALYSATOREN
PROCESS FOR THE ELECTROCHEMICAL PREPARATION OF CATALYSTS BASED ON TRANSITION METAL AND PHOSPHINE

(30) Priorité: 29.12.1995 FR 9515880
(43) Date de publication de la demande: 11.11.1998
(73) Titulaire: Rhodia Polyamide Intermediates, 69192 Saint-Fons (FR)
(72) Inventeur: HORBEZ, Dominique, F-95130 Franconville (FR); HUSER, Marc, F-69100 Villeurbanne (FR); PERRON, Robert, F-69390 Charly (FR)
(74) Mandataire: Esson, Jean-Pierre
(86) Numéro de dépôt international: FR9602024
(87) Numéro de publication internationale: WO97024184

(56) Documents cités:
- EP-A- 0 354 845
- EP-A- 0 475 820
- EP-A- 0 715 890
- FR-A- 2 080 556
- FR-A- 2 338 253

## Description

La présente invention concerne un procédé électrochimique de préparation de composés pouvant être utilisés comme catalyseurs.

Les composés visés par le procédé de l'invention comportent au moins un métal de transition au degré d'oxydation 0 ou 1 associé à au moins une phosphine hydrosoluble monodentate ou bidentate.

De tels composés peuvent être utilisés par exemple comme catalyseurs à la place des catalyseurs mis en oeuvre dans la réaction d'hydrocyanation de composés éthyléniques, telle que décrite dans le brevet FR-A-2338253. Dans le présent texte, ils seront nommés catalyseurs sans que cela limite leur domaine d'utilisation. Le brevet européen EP715890 décrit un procédé de préparation électrochimique de catalyseurs à base de métal de transition et d'une phosphine monodentate sulfonée.

Le procédé de synthèse électrochimique des catalyseurs consiste à traiter par électrolyse une solution aqueuse contenant au moins un composé d'un métal de transition et au moins une phosphine hydrosoluble monodentate ou bidentate, placée dans le compartiment cathodique d'une cellule d'électrolyse d'un électrolyseur.

La phosphine hydrosoluble mise en oeuvre dans le procédé de l'invention une phosphine monodentate répondant à la formule générale (I):

P (Ar1)ₐ (Ar2)_{b} (Ar3)_{c} (D1)_{d} (D2)ₑ (D3)_{f} (I)

dans laquelle :
- Ar1 et Ar2, identiques ou différents, représentent des groupes aryle ou aryle comportant un ou plusieurs substituants tels que :
   - radical alkyle ou alcoxy ayant 1 à 4 atomes de carbone,
   - atome d'halogène,
   - groupe nitrile,
   - groupe nitro,
   - groupe hydrophile comme :
      -COOM, -SO₃M, -PO₃M, M représentant un reste cationique minéral ou organique choisi parmi le proton, les cations dérivés des métaux alcalins ou alcalino-terreux, les cations ammonium -N(R)₄ dans la formule desquels les symboles R, identiques ou différents, représentent un atome d'hydrogène ou un radical alkyle ayant de 1 à 4 atomes de carbone, les autres cations dérivés de métaux dont les sels des acides arylcarboxyliques, des acides arylsulfoniques ou des acides arylphosphoniques sont solubles dans l'eau,
      -N(R)₃ dans la formule duquel les symboles R, identiques ou différents, représentent un atome d'hydrogène ou un radical alkyle ayant de 1 à 4 atomes de carbone,
      -OH
- Ar3 représente un groupe aryle comportant un ou plusieurs substituants tels que :
   - radical alkyle ou alcoxy ayant 1 à 4 atomes de carbone,
   - atome d'halogène
   - groups nitrile,
   - groupe nitro,
   - groupe hydrophile comme :
      -COOM, -PO₃M, M représentant un reste cationique minéral ou organique choisi parmi le proton, les cations dérivés des métaux alcalins ou alcalino-terreux, les cations ammonium -N(R)₄ dans la formule desquels les symboles R, identiques ou différents, représentent un atome d'hydrogène ou un radical alkyle ayant de 1 à 4 atomes de carbone, les autres cations dérivés de métaux dont les sels des acides arylcarboxyliques ou des acides arylphosphoniques sont solubles dans l'eau,
      -N(R)₃ dans la formule duquel les symboles R, identiques ou différents, représentent un atome d'hydrogène ou un radical alkyle ayant de 1 à 4 atomes de carbone,
      -OH,
   l'un au moins desdits substituants de Ar3 étant un groupe hydrophile tel que défini précédemment,
- a représente 0 ou 1,
- b représente 0 ou 1,
- c représente 0 ou 1,
- D1, D2 et D3 , identiques ou différents, représentent un groupe alkyle, un groupe cycloalkyle, un groupe alkyle ou cycloalkyle comportant un ou plusieurs substituants tels que :
   - radical alcoxy ayant 1 à 4 atomes de carbone,
   - atome d'halogène,
   - groupe nitrile,
   - groupe nitro,
   - groupe hydrophile comme :
      -COOM, -SO₃M, -PO₃M, M représentant un reste cationique minéral ou organique choisi parmi le proton, les cations dérivés des métaux alcalins ou alcalino-terreux, les cations ammonium -N(R)₄ dans la formule desquels les symboles R, identiques ou différents, représentent un atome d'hydrogène ou un radical alkyle ayant de 1 à 4 atomes de carbone, les autres cations dérivés de métaux dont les sels des acides carboxyliques, des acides sulfoniques ou des acides phosphoniques sont solubles dans l'eau,
      -N(R)₃ dans la formule duquel les symboles R, identiques ou différents, représentent un atome d'hydrogène ou un radical alkyle ayant de 1 à 4 atomes de carbone,
      -OH
- d, e, f représentent 0 ou 1,
- la somme (a+b+c+d+e+f) est égale à 3
- et quand un des substituants d'un radical Ar₁, Ar₂ est -SO₃M, les autres radicaux Ar₁, Ar₂, Ar₃ ne peuvent être substitués par un radical alkyl, alcoxy, halogéne, CN, NO₂, OH, N(R)₃, SO₃M
ou bidentate répondant à la formule générale (II) :

(Ar1)ₐ (Ar2)_{b} (D1)_{d} (D2)ₑ P L P (Ar1)_{g} (Ar2)ₕ (D1)ᵢ (D2)ⱼ (II)

dans laquelle :
- Ar1, Ar2 , D1 et D2 ont les significations indiquées précédemment pour la formule (I),
- a, b, d, e, g, h, i et j représentent chacun 0 ou 1,
- la somme (a+b+d+e) est égale à 2,
- la somme (g+h+i+j) est égale à 2,
- L représente un lien valentiel simple ou un radical hydrocarboné divalent tel qu'un radical alkylène, un radical cycloalkylène, un radical arylène, un radical dérivant d'un hétérocycle comportant un ou deux atomes d'oxygène, d'azote ou de soufre dans le cycle, ces différents radicaux cycliques étant liés directement à l'un des atomes de phosphore ou aux deux atomes de phosphore ou étant lié à l'un des atomes de phosphore ou aux deux par l'intermédiaire d'un radical alkylène linéaire ou ramifié ayant de 1 à 4 atomes de carbone, le ou les cycles éventuellement parties du radical divalent L pouvant comporter un ou plusieurs substituants tels que ceux définis pour Ar1, Ar2, D1 et D2.

On peut citer, comme exemples de métaux dont les sels des acides carboxyliques, des acides sulfoniques ou des acides phosphoniques sont solubles dans l'eau, le plomb, le zinc et l'étain.

Par l'expression soluble dans l'eau, on entend dans le présent texte un composé soluble à au moins 0,01 g par litre d'eau.

Les phosphines hydrosolubles préférées sont les phosphines de formule (I) ou de formule (II) dans lesquelles Ar1 et Ar2 sont des groupes phényle ou des groupes phényles comportant un ou deux substituants tels que définis précédemment, Ar3 est un groupe phényle comportant un ou deux substituants tels que définis précédemment, D1, D2, D3, identiques ou différents, représentent un groupe alkyle ayant de 1 à 6 atomes de atomes de carbone, un groupe cycloalkyle ayant 5 à 8 atomes de carbone, un groupe alkyle ayant de 1 à 6 atomes de carbone ou cycloalkyle ayant 5 à 8 atomes de carbone comportant un ou plusieurs substituants tels que définis précédemment, L est un lien valentiel simple, un radical alkylène ayant de 1 à 6 atomes de carbone, un radical cycloalkylène monocyclique ou bicyclique ayant de 4 à 12 atomes de carbone, un radical phénylène, un radical diphénylène, un radical naphtylène, un radical dinaphtylène,un radical dérivant d'un hétérocycle comportant un ou deux atomes d'oxygène, d'azote ou de soufre dans le cycle, ces différents radicaux cycliques étant liés directement à l'un des atomes de phosphore ou aux deux atomes de phosphore ou étant lié à l'un des atomes de phosphore ou aux deux par l'intermédiaire d'un radical alkylène linéaire ou ramifié ayant de 1 à 4 atomes de carbone, le ou les cycles éventuellement parties du radical divalent L pouvant comporter un ou plusieurs substituants tels que groupe alkyle ayant 1 à 4 atomes de carbone.

Les phosphines hydrosolubles préférées sont les phosphines de formule (I) ou de formule (II), dans lesquelles:
- le ou les substituants de Ar1 et Ar2, identiques ou différents, représentent des groupes tels que :
   - radical alkyle ou alcoxy ayant 1 à 2 atomes de carbone,
   - atome de chlore,
   - groupe hydrophile comme :
      -COOM, -SO₃M, -PO₃M, M représentant un reste cationique minéral ou organique choisi parmi le proton, les cations dérivés du sodium, du potassium, du calcium ou du baryum, les cations ammonium, tétraméthylammonium, tétraéthylammonium, tétrapropylammonium, tétrabutylammonium, les cations dérivés du zinc, du plomb ou de l'étain,
      -N(R)₃ dans la formule duquel les symboles R, identiques ou différents, représentent un atome d'hydrogène ou un radical alkyle ayant de 1 à 4 atomes de carbone,
      -OH
- le ou les substituants de Ar3, identiques ou différents, représentent des groupes tels que:
   - radical alkyle ou alcoxy ayant 1 à 2 atomes de carbone,
   - atome de chlore,
   - groupe hydrophile comme :
      -COOM, -PO₃M, M représentant un reste cationique minéral ou organique choisi parmi le proton, les cations dérivés du sodium, du potassium, du calcium ou du baryum, les cations ammonium, tétraméthylammonium, tétraéthylammonium, tétrapropylammonium, tétrabutylammonium, les cations dérivés du zinc, du plomb ou de l'étain,
      -N(R)₃ dans la formule duquel les symboles R, identiques ou différents, représentent un atome d'hydrogène ou un radical alkyle ayant de 1 à 4 atomes de carbone,
      -OH
globalement deux au moins desdits substituants de Ar1, Ar2, Ar3, D1, D2, D3 pour les phosphines de formule (I) et de Ar1, Ar2, D1, D2 pour les phosphines de formule (II) étant un groupe hydrophile tel que défini précédemment.

A titre d'exemples non limitatifs de phosphines de formule générale (I), on peut citer notamment la tris(hydroxyméthyl) phosphine, la tris(2-hydroxyéthyl) phosphine, la tris(3-hydroxypropyl) phosphine, la tris(2-carboxyméthyl) phosphine, le sel de sodium de la tris(3-carboxyphényl) phosphine, la tris(3-carboxyéthyl) phosphine, l'iodure de la tris(4-triméthylammoniumphényl) phosphine, le sel de sodium de la tris(2-phosphoéthyl) phosphine, la bis(2-carboxyéthyl) phényl phosphine, l'hydroxyméthyl bis(2-hydroxyéthyl) phosphine, le sel de sodium de la tris(paraphosphophényl) phosphine, le sel de sodium de la bis(métasulfophényl) paracarboxyphényl phosphine, le sel de sodium de la bis(métasulfophényl) sulfo-2 éthyl phosphine.

A titre d'exemples non limitatifs de phosphines de formule générale (II), on peut citer notamment le sel de sodium du 2,2'-bis[di(sulfonatophényl)phosphino]-1,1'-binaphtyl, le sel de sodium du 1,2-bis[di(sulfonatophényl)phosphinométhyl] cyclobutane (CBDTS), le 1,2-bis(dihydroxyméthyl-phosphino) éthane, le 1,3-bis(dihydroxyméthylphosphino) propane, le sel de sodium du 2,2'-bis[di(sulfonatophényl)phosphinométhyl]-1,1'-binaphtyl.

On peut bien évidemment utiliser des mélanges de plusieurs phosphines hydrosolubles définies précédemment.

Certaines des phosphines hydrosolubles de formule (I) ou (II) sont disponibles dans le commerce.

Pour la préparation des autres, on peut se référer aux procédés généraux ou particuliers de synthèse des phosphines décrits dans les ouvrages généraux comme HOUBEN-WEYL, Method der organischen Chemie, organische Phosphor Verbindungen, teil 1 (1963).

Enfin, pour la préparation des dérivés hydrosolubles non décrits, on peut à partir des phosphines ne comportant pas de substituants hydrosolubles définis précédemment, procéder facilement à l'introduction d'un ou plusieurs de ces substituants hydrophiles. Ainsi les groupements sulfonates par exemple peuvent être introduits par la réaction de SO₃ dans l'acide sulfurique. Les groupes carboxylates, phosphonates, ammonium quaternaires peuvent de même être introduits en appliquant les méthodes chimiques connues pour ce type de synthèse.

On utilise de préférence comme composés des métaux de transition des composés du nickel, du cobalt, du fer, du palladium, du platine, du rhodium et de l'iridium. On utilise des composés solubles dans l'eau ou capables de passer en solution dans les conditions de la réaction. Le reste lié au métal n'est pas critique, dès l'instant qu'il satisfait à ces conditions.

Parmi les composés précités, les composés les plus préférés sont ceux du nickel. On peut citer à titre d'exemples non limitatifs des composés tels que carboxylates (notamment acétate, formiate, citrate) de nickel, carbonate de nickel, bicarbonate de nickel, borate de nickel, bromure de nickel, chlorure de nickel, iodure de nickel, thiocyanate de nickel, cyanure de nickel, hydroxyde de nickel, hydrophosphite de nickel, phosphite de nickel, phosphate de nickel et dérivés, nitrate de nickel, sulfate de nickel, sulfite de nickel, aryl- et alkyl-sulfonates de nickel.

Il n'est pas nécessaire que le composé du nickel soit lui même soluble dans l'eau. Par exemple, le cyanure de nickel peu soluble dans l'eau se dissout bien dans une solution aqueuse de phosphine hydrosoluble.

La cellule d'électrolyse de l'électrolyseur utilisée dans le présent procédé, comporte un compartiment cathodique et un compartiment anodique séparés par un élément séparateur.

La cathode de la cellule d'électrolyse peut être réalisée en un matériau tel que le platine, l'or, l'iridium, le ruthénium, le palladium, le nickel, le graphite, le carbone vitreux, le fer, un acier inoxydable, un acier spécial, le plomb, le zinc, le cadmium, le mercure, un amalgame. Elle peut être constituée également par du titane, du tantale, du nickel ou d'un acier inoxydable, revêtu d'une couche de platine, d'or, d'iridium, de ruthénium, d'un mélange de plusieurs de ces métaux, d'oxydes de platine, de palladium, d'iridium, de rhodium, de ruthénium, d'osmium, de tantale ou d'un mélange de plusieurs de ces oxydes.

La cathode peut avoir une structure plane telle que plaque, grille ou une structure volumique ; elle peut notamment être trouée ou déployée. Comme types de structures volumiques, on peut utiliser des empilements granulaires des matériaux cités précédemment, des feutres ou des mousses de ces matériaux.

L'anode peut être réalisée en un matériau tel que le platine, l'or, l'iridium, le ruthénium, le palladium, le nickel, le graphite, le carbone vitreux, un acier inoxydable, un acier spécial, le plomb. Elle peut être constituée également par du titane ou du tantale revêtu d'une couche de platine, d'or, d'iridium, de ruthénium, d'un mélange de plusieurs de ces métaux, d'oxydes de platine, de palladium, d'iridium, de rhodium, de ruthénium, d'osmium, de tantale ou d'un mélange de plusieurs de ces oxydes.

La structure de l'anode peut être de différents types comme cela a été défini pour la cathode.

L'élément séparateur de la cellule d'électrolyse est constitué par une membrane échangeuse d'ions ou un diaphragme poreux.

Les membranes peuvent être du type cationique, notamment préparées à partir de résines échangeuses de cation possédant des groupes acides comme les groupes sulfoniques ou des groupes carboxyliques. De préférence, on utilisera les membranes préparées avec des résines sulfoniques. Comme membranes de cette sorte, on peut citer par exemple celles qui sont vendues sous les marques commerciales Nafion® (membranes sulfoniques perfluorées) ou Selemion®.

Les membranes peuvent aussi être de type anionique, mais les membranes cationiques sont généralement préférées, car elles présentent un certain nombre d'avantages. Elles sont notamment plus solides que les membranes anioniques et elles permettent également d'opérer avec des intensités de courant plus élevées.

Les diaphragmes poreux peuvent être notamment des diaphragmes en céramique poreuse, des diaphragmes en fibres synthétiques tissées ou non-tissées, des diaphragmes déposés à base de fibres d'amiante ou de fibres synthétiques.

L'élément séparateur peut être disposé en appui sur l'anode ou sur la cathode.

Comme indiqué précédemment, dans le compartiment cathodique se trouve la solution aqueuse comprenant la phosphine hydrosoluble monodentate ou bidentate et le composé du métal de transition. La concentration initiale en phosphine hydrosoluble monodentate ou bidentate se situe généralement entre 10⁻³ mole/litre et 1 mole/litre. La concentration initiale en composé du métal de transition, notamment en composé du nickel, se situe généralement entre 10⁻⁵ mole/litre et 1 mole/litre.

On peut rajouter dans le compartiment cathodique d'autres composés permettant d'augmenter la conductivité de l'électrolyte, tels que par exemple des sels solubles.

On peut également rajouter des agents complexants susceptibles de modifier le potentiel auquel est effectuée la réduction du métal de transition. Comme exemples de tels agents complexants, on peut citer les cyanures et les chlorures.

La solution du compartiment cathodique peut en outre comprendre des composés dont le rôle est de compléter le catalyseur préparé par le procédé de l'invention. Ces composés sont notamment des acides de Lewis.

Par acide de Lewis, on entend dans le présent texte, selon la définition usuelle, des composés accepteurs de doublets électroniques.

On peut mettre en oeuvre notamment les acides de Lewis cités dans l'ouvrage édité par G.A. OLAH "Friedel-Crafts and related Reactions", tome I, pages 191 à 197 (1963).

Les acides de Lewis qui peuvent être mis en oeuvre dans le compartiment cathodique sont choisis parmi les composés des éléments des groupes Ib, IIb, IIIa, Illb, IVa, IVb, Va, Vb, Vlb, Vllb et VIII de la Classification périodique des éléments, telle que publiée dans Handbook of chemistry and physics, 51st Edition (1970-1971) of The Chemical Rubber Co, dans la mesure où lesdits composés sont au moins partiellement solubles et stables dans l'eau ou plus généralement dans la solution aqueuse à traiter par électrolyse. Ces composés sont le plus souvent, mais de manière non limitative, des sels, notamment des halogénures, de préférence chlorures et bromures, des sulfates, des nitrates,
des sulfonates, notamment des trifluorométhanesulfonates, des carboxylates, des acétylacétonates, des tétrafluoroborates et des phosphates.

A titre d'exemples non limitatifs de tels acides de Lewis, on peut citer le chlorure de zinc, le bromure de zinc, l'iodure de zinc, le trifluorométhanesulfonate de zinc, l'acétate de zinc, le nitrate de zinc, le tétrafluoroborate de zinc, le chlorure de manganèse, le bromure de manganèse, le chlorure de nickel, le bromure de nickel, le cyanure de nickel, l'acétylacétonate de nickel, le chlorure de cadmium, le bromure de cadmium, le chlorure stanneux, le bromure stanneux, le sulfate stanneux, le tartrate stanneux, les chlorures, bromures, sulfates, nitrates, carboxylates ou trifluorométhanesulfonates des éléments des terres rares comme le lanthane, le cérium, le praséodyme, le néodyme, le samarium, l'europium, le gadolinium, le terbium, le dysprosium, l'holmium, l'erbium, le thulium, l'ytterbium et le lutétium, le chlorure de cobalt, le chlorure ferreux, le chlorure d'yttrium.

On peut bien entendu mettre en oeuvre des mélanges de plusieurs acides de Lewis.

Parmi les acides de Lewis qui peuvent être utilisés, on peut citer tout particulièrement le chlorure de zinc, le bromure de zinc, le sulfate de zinc, le tétrafluoroborate de zinc, le chlorure stanneux, le bromure stanneux, les mélanges chlorure de zinc/chlorure stanneux, le chlorure de nickel, le bromure de nickel, l'acétylacétonate de nickel.

L'acide de Lewis mis en oeuvre représente généralement de 0 à 50 moles par mole de composé de métal de transition, plus particulièrement de composé du nickel, et de préférence de 0 à 10 moles par mole.

Le compartiment anodique contient une solution aqueuse d'un anolyte qui peut être constitué par un acide tel que notamment l'acide sulfurique, l'acide nitrique, les acides carboxyliques solubles dans l'eau comme l'acide acétique, par leurs sels notamment de sodium, de potassium, d'ammonium ou d'ammonium quatemaire ou par une base telle que notamment la soude ou la potasse. De préférence, l'anolyte sera choisi parmi l'acide sulfurique et ses sels, notamment le sulfate dipotassique, l'hydrogénosulfate de potassium, le sulfate disodique, l'hydrogénosulfate de sodium.

L'anolyte peut aussi être constitué par une ou plusieurs phosphines hydrosolubles définies précédemment.

La concentration initiale de l'anolyte dans la solution du compartiment anodique est généralement de 10⁻³ mole/litre à 3 moles/litre.

Le courant électrique mis en oeuvre dans le procédé de l'invention est défini par son intensité et le potentiel à la cathode. Le potentiel peut être maintenu constant pendant la durée de l'électrolyse (potentiostatique). Une autre possibilité est de maintenir constante l'intensité (intensiostatique). En fonctionnement continu du procédé de l'invention, ces deux variantes sont équivalentes.

Lorsque l'on opère à potentiel constant, la valeur de celui-ci peut être facilement déterminée par l'homme du métier par le tracé de courbes intensité/potentiel.

La densité de courant peut atteindre 30 A/dm². Elle est ajustée en fonction de la quantité de métal de transition à réduire.

La température à laquelle on opère se situe généralement de 0°C à 95°C.

Une variante intéressante du procédé de l'invention consiste à régénérer un catalyseur usé, c'est-à-dire un catalyseur ayant servi et étant devenu au moins partiellement inactif. Ainsi, un catalyseur à base de phosphine hydrosoluble monodentate ou bidentate et d'un métal de transition au degré d'oxydation 0 ou 1, contenant aussi éventuellement un ou plusieurs acides de Lewis, utilisé dans la réaction d'hydrocyanation du butadiène et/ou de pentène-nitriles se désactive progressivement, en particulier par oxydation du métal de transition. Celui-ci, et plus particulièrement le nickel, est transformé au moins en partie en cyanure. En fin de réaction d'hydrocyanation, la phase aqueuse contenant notamment la phosphine hydrosoluble monodentate ou bidentate et le composé du métal de transition peut être aisément séparée de la phase organique. Cette phase aqueuse peut contenir des quantités variables de composés initialement introduits comme le butadiène et/ou les pentène-nitriles ou formés en cours de réaction comme l'adiponitrile, le méthyl-glutaronitrile, l'éthyl-succinonitrile, les pentène-nitriles, les méthylbutène-nitriles. La phase aqueuse est traitée électrochimiquement comme décrit précédemment afin de régénérer le catalyseur.

L'exemple qui suit illustre l'invention.

### EXEMPLE

### Appareillage utilisé.

La cellule d'électrolyse est composée d'un récipient cylindrique en verre ayant un volume utile d'environ 100 ml, dans lequel se trouve une cathode sous forme d'une grille en platine, un puits anodique cylindrique, placé à l'intérieur de la grille cathodique et comportant à base une membrane en résine de type Nafion 417® et dans lequel plonge l'anode sous forme de plaque de platine.

L'électrolyseur est relié à un potentiostat qui permet de maintenir le potentiel de la cathode à une valeur de -1,2 Volt par rapport à une électrode de référence Ag/AgCl.

### Abréviations utilisées :

3PN = pentène-3 nitrile
ADN = adiponitrile
RT = sélectivité en un composé obtenu par rapport au composé de départ transformé
t.o. = tum-over = nombre de mmol de dinitriles formés par mmol de Ni(0) engagé COD = cyclo-octadiène.

On charge dans le compartiment cathodique d'un électrolyseur 50 ml d'une solution aqueuse renfermant 7,5 mmol de cyanure de nickel Ni(CN)₂ et 15 mmol du sel de sodium du 1,2-bis[di(sulfonatophényl) phosphinométhyl] cyclobutane (CBDTS).

Dans le compartiment anodique, on charge 50 ml d'une solution aqueuse d'acide sulfurique (0,02N).

L'électrolyse est réalisée à 25°C au potentiel contrôlé de -1,2 Volt. Des prélèvements sont régulièrement effectués afin de doser le Ni(II) restant par polarographie.

Après 15 h d'électrolyse, 80 % du Ni(II) sont convertis en Ni(0).

Tests en hydrocyanation du pentène-3 nitrile de la solution 1 de catalyseur générée électrochimiquement.

| **Essais** | **Catalyseur** | **Ni(0) (mmol)** | **HCN (mmol/h)** | **RT**_{**ADN**} **(%)** | **t.o.** |
|---|---|---|---|---|---|
| **CE1 *** | Ni(COD)₂/CBDTS | 4,5 | 44 | 81 | 4 |
| **CE2**** | Ni(CN)₂(CBDTS) | 0 | 44 | 0 | 0 |
| **Exemple** | solution 1 | 3,6 | 35 | 80 | 5 |
| Conditions opératoires des tests d'hydrocyanation : - 3PN : 204 mmol ; ZnCl₂ : 20 mmol ; 65°C ; 0,5 h. CE1 * = essai comparatif avec un catalyseur préparé par échange des ligands COD de Ni(COD)₂ par le CBDTS, CE2 ** = essai comparatif avec une solution de Ni(CN)₂(CBDTS) non traitée électrochimiquement. | | | | | |

## Revendications

1. Procédé de préparation électrochimique de catalyseurs comportant au moins un métal de transition au degré d'oxydation 0 ou 1, associé à au moins une phosphine hydrosoluble monodentate ou bidentate, **caractérisé en ce qu'**il consiste à traiter par électrolyse une solution aqueuse contenant au moins un composé d'un métal de transition et au moins une phosphine hydrosoluble monodentate ou bidentate, placée dans le compartiment cathodique d'une cellule d'électrolyse d'un électrolyseur, la phosphine monodentate répondant à la formule générale (I) :
P (Ar1)ₐ (Ar2)_{b} (Ar3)_{c} (D1)_{d} (D2)ₑ (D3)_{f} (I)
dans laquelle :
- Ar1 et Ar2, identiques ou différents, représentent des groupes aryle ou aryle comportant un ou plusieurs substituants tels que :
- radical alkyle ou alcoxy ayant 1 à 4 atomes de carbone,
- atome d'halogène,
- groupe nitrile,
- groupe nitro,
- groupe hydrophile comme :
-COOM, -SO₃M, -PO₃M, M représentant un reste cationique minéral ou organique choisi parmi le proton, les cations dérivés des métaux alcalins ou alcalino-terreux, les cations ammonium -N(R)₄ dans la formule desquels les symboles R, identiques ou différents, représentent un atome d'hydrogène ou un radical alkyle ayant de 1 à 4 atomes de carbone, les autres cations dérivés de métaux dont les sels des acides arylcarboxyliques, des acides arylsulfoniques ou des acides arylphosphoniques sont solubles dans l'eau,
-N(R)₃ dans la formule duquel les symboles R, identiques ou différents, représentent un atome d'hydrogène ou un radical alkyle ayant de 1 à 4 atomes de carbone,
-OH
- Ar3 représente un groupe aryle comportant un ou plusieurs substituants tels que :
- radical alkyle ou alcoxy ayant 1 à 4 atomes de carbone,
- atome d'halogène
- groupe nitrile,
- groupe nitro,
- groupe hydrophile comme :
-COOM, -PO₃M, M représentant un reste cationique minéral ou organique choisi parmi le proton, les cations dérivés des métaux alcalins ou alcalino-terreux, les cations ammonium -N(R)₄ dans la formule desquels les symboles R, identiques ou différents, représentent un atome d'hydrogène ou un radical alkyle ayant de 1 à 4 atomes de carbone, les autres cations dérivés de métaux dont les sels des acides arylcarboxyliques ou des acides arylphosphoniques sont solubles dans l'eau,
-N(R)₃ dans la formule duquel les symboles R, identiques ou différents, représentent un atome d'hydrogène ou un radical alkyle ayant de 1 à 4 atomes de carbone,
-OH,
l'un au moins desdits substituants de Ar3 étant un groupe hydrophile tel que défini précédemment,
- a représente 0 ou 1,
- b représente 0 ou 1,
- c représente 0 ou 1,
- D1, D2 et D3, identiques ou différents, représentent un groupe alkyle, un groupe cycloalkyle, un groupe alkyle ou cycloalkyle comportant un ou plusieurs substituants tels que :
- radical alcoxy ayant 1 à 4 atomes de carbone,
- atome d'halogène,
- groupe nitrile,
- groupe nitro,
- groupe hydrophile comme :
-COOM, -SO₃M, -PO₃M, M représentant un reste cationique minéral ou organique choisi parmi le proton, les cations dérivés des métaux alcalins ou alcalino-terreux, les cations ammonium -N(R)₄ dans la formule desquels les symboles R, identiques ou différents, représentent un atome d'hydrogène ou un radical alkyle ayant de 1 à 4 atomes de carbone, les autres cations dérivés de métaux dont les sels des acides carboxyliques, des acides sulfoniques ou des acides phosphoniques sont solubles dans l'eau,
-N(R)₃ dans la formule duquel les symboles R, identiques ou différents, représentent un atome d'hydrogène ou un radical alkyle ayant de 1 à 4 atomes de carbone,
-OH
- d, e, f représentent 0 ou 1,
- la somme (a+b+c+d+e+f) est égale à 3
- et quand un des substituants d'un radical Ar₁, Ar₂ est -SO₃M, les autres radicaux Ar₁, Ar₂, Ar₃ ne peuvent être substitués par un radical alkyl, alcoxy, halogéne, CN, NO₂, OH, N(R )₃, SO₃M
ou bidentate répondant à la formule générale (II) :
(Ar1)ₐ (Ar2)_{b} (D1)_{d} (D2)ₑ P L P (Ar1)_{g} (Ar2)ₕ (D1)ᵢ (D2)ⱼ (II)
dans laquelle :
- Ar1, Ar2 , D1 et D2 ont les significations indiquées précédemment pour la formule (I),
- a, b, d, e, g, h, i et j représentent chacun 0 ou 1,
- la somme (a+b+d+e) est égale à 2,
- la somme (g+h+i+j) est égale à 2,
- L représente un lien valentiel simple ou un radical hydrocarboné divalent tel qu'un radical alkylène, un radical cycloalkylène, un radical arylène, un radical dérivant d'un hétérocycle comportant un ou deux atomes d'oxygène, d'azote ou de soufre dans le cycle, ces différents radicaux cycliques étant liés directement à l'un des atomes de phosphore ou aux deux atomes de phosphore ou étant lié à l'un des atomes de phosphore ou aux deux par l'intermédiaire d'un radical alkylène linéaire ou ramifié ayant de 1 à 4 atomes de carbone, le ou les cycles éventuellement parties du radical divalent L pouvant comporter un ou plusieurs substituants tels que ceux définis pour Ar₁, Ar₂, D₁ et D₂.

2. Procédé selon la revendication 1, **caractérisé en ce que** la cellule d'électrolyse de l'électrolyseur comporte un compartiment cathodique et un compartiment anodique séparés par un élément séparateur constitué par une membrane échangeuse d'ions ou un diaphragme poreux.

3. Procédé selon l'une des revendications 1 ou 2, **caractérisé en ce que** la cathode de la cellule d'électrolyse est en un matériau tel que le platine, l'or, l'iridium, le ruthénium, le palladium, le nickel, le graphite, le carbone vitreux, le fer, un acier inoxydable, un acier spécial, le plomb, le mercure, un amalgame ou être constituée par du titane, du tantale, du nickel ou d'un acier inoxydable, revêtu d'une couche de platine, d'or, d'iridium, de ruthénium, d'un mélange de plusieurs de ces métaux, d'oxydes de platine, de palladium, d'iridium, de rhodium, de ruthénium, d'osmium, de tantale ou d'un mélange de plusieurs de ces oxydes.

4. Procédé selon l'une des revendications 1 à 3, **caractérisé en ce que** la cathode et l'anode de la cellule d'électrolyse ont une structure plane telle que plaque, grille ou une structure volumique et qu'elles sont trouées ou déployées.

5. Procédé selon l'une des revendications 1 à 4, **caractérisé en ce que** la cathode
ou l'anode a une structure volumique choisie parmi les empilements granulaires des matériaux qui la constituent, les feutres ou les mousses de cesdits matériaux.

6. Procédé selon l'une des revendications 1 à 5, **caractérisé en ce que** l'anode est un matériau tel que le platine, l'or, l'iridium, le ruthénium, le palladium, le nickel, le graphite, le carbone vitreux, un acier inoxydable, un acier spécial, le plomb ou être constituée par du titane ou du tantale revêtu d'une couche de platine, d'or, d'iridium, de ruthénium, d'un mélange de plusieurs de ces métaux, d'oxydes de platine, de palladium, d'iridium, de rhodium, de ruthénium, d'osmium, de tantale ou d'un mélange de plusieurs de ces oxydes.

7. Procédé selon l'une des revendications 1 à 6, **caractérisé en ce que** l'élément séparateur est choisi parmi les membranes de type cationique, préparées à partir de résines échangeuses de cation possédant des groupes acides comme les groupes sulfoniques ou des groupes carboxyliques et de préférence parmi les membranes préparées avec des résines sulfoniques.

8. Procédé selon l'une des revendications 1 à 6, **caractérisé en ce que** l'élément séparateur est choisi parmi les diaphragmes en céramique poreuse, les diaphragmes en fibres synthétiques tissées ou non-tissées, les diaphragmes déposés à base de fibres d'amiante ou de fibres synthétiques.

9. Procédé selon l'une des revendications 1 à 8, **caractérisé en ce que** les phosphines hydrosolubles préférées sont les phosphines de formule (I) ou de formule (II) dans lesquelles Ar1 et Ar2 sont des groupes phényle ou des groupes phényles comportant un ou deux substituants tels que définis dans la revendication 1, Ar3 est un groupe phényle comportant un ou deux substituants tels que définis précédemment dans la revendication 1, D1, D2, D3, identiques ou différents, représentent un groupe alkyle ayant de 1 à 6 atomes de carbone, un groupe cycloalkyle ayant 5 à 8 atomes de carbone, un groupe alkyle ayant de 1 à 6 atomes de carbone ou cycloalkyle ayant 5 à 8 atomes de carbone comportant un ou plusieurs substituants tels que définis précédemment dans la revendication 1, L est un lien valentiel simple, un radical alkylène ayant de 1 à 6 atomes de carbone, un radical cycloalkylène monocyclique ou bicyclique ayant de 4 à 12 atomes de carbone, un radical phénylène, un radical diphénylène, un radical naphtylène, un radical dinaphtylène,un radical dérivant d'un hétérocycle comportant un ou deux atomes d'oxygène, d'azote ou de soufre dans le cycle, ces différents radicaux cycliques étant liés directement à l'un des atomes de phosphore ou aux deux atomes de phosphore ou étant lié à l'un des atomes de phosphore ou aux deux par l'intermédiaire d'un radical alkylène linéaire ou ramifié ayant de 1 à 4 atomes de carbone, le ou les cycles éventuellement parties du radical divalent L pouvant comporter un ou plusieurs substituants tels que groupe alkyle ayant 1 à 4 atomes de carbone.

10. Procédé selon l'une des revendications 1 à 9, **caractérisé en ce que les** phosphines hydrosolubles préférées sont les phosphines de formule (I) ou de formule (II) dans lesquelles:
- le ou les substituants de Ar1 et Ar2, identiques ou différents, représentent des groupes tels que :
- radical alkyle ou alcoxy ayant 1 à 2 atomes de carbone,
- atome de chlore,
- groupe hydrophile comme :
-COOM, -SO₃M, -PO₃M, M représentant un reste cationique minéral ou organique choisi parmi le proton, les cations dérivés du sodium, du potassium, du calcium ou du baryum, les cations ammonium, tétraméthylammonium, tétraéthylammonium, tétrapropylammonium, tétrabutylammonium, les cations dérivés du zinc, du plomb ou de l'étain,
-N(R)₃ dans la formule duquel les symboles R, identiques ou différents, représentent un atome d'hydrogène ou un radical alkyle ayant de 1 à 4 atomes de carbone,
-OH
- le ou les substituants de Ar3, identiques ou différents, représentent des groupes tels que:
- radical alkyle ou alcoxy ayant 1 à 2 atomes de carbone,
- atome de chlore,
- groupe hydrophile comme :
-COOM, -PO₃M, M représentant un reste cationique minéral ou organique choisi parmi le proton, les cations dérivés du sodium, du potassium, du calcium ou du baryum, les cations ammonium, tétraméthylammonium, tétraéthylammonium, tétrapropylammonium, tétrabutylammonium, les cations dérivés du zinc, du plomb ou de l'étain,
-N(R)₃ dans la formule duquel les symboles R, identiques ou différents, représentent un atome d'hydrogène ou un radical alkyle ayant de 1 à 4 atomes de carbone,
-OH
globalement deux au moins desdits substituants de Ar1, Ar2, Ar3, D1, D2, D3 pour les phosphines de formule (I) et de Ar1, Ar2, D1, D2 pour les phosphines de formule (II) étant un groupe hydrophile tel que défini précédemment.

11. Procédé selon l'une des revendications 1 à 10, **caractérisé en ce que** la phosphine hydrosoluble monodentate de formule générale (I) est choisie parmi la tris(hydroxyméthyl) phosphine, la tris(2-hydroxyéthyl) phosphine, la tris(3-hydroxypropyl) phosphine, la tris(2-carboxyméthyl) phosphine, le sel de sodium de la tris(3-carboxyphényl) phosphine, la tris(3-carboxyéthyl) phosphine, l'iodure de la tris(4-triméthylammoniumphényl) phosphine, le sel de sodium de la tris(2-phosphoéthyl) phosphine, la bis(2-carboxyéthyl) phényl phosphine, l'hydroxyméthyl bis(2-hydroxyéthyl) phosphine, le sel de sodium de la tris(paraphosphophényl) phosphine, le sel de sodium de la bis(métasulfophényl) paracarboxyphényl phosphine, le sel de sodium de la bis(métasulfophényl) sulfo-2 éthyl phosphine, et la phosphine bidentate de formule générale (II) est choisie parmi le sel de sodium du 2,2'-bis[di(sulfonatophényl)phosphino]-1,1'-binaphtyl, le sel de sodium du 1,2-bis[di(sulfonatophényl)phosphinométhyl] cyclobutane (CBDTS), le 1,2-bis(dihydroxyméthyl-phospnino) éthane, le 1,3-bis(dihydroxyméthylphosphino) propane, le sel de sodium du 2,2'-bis[di(sulfonatophényl)phosphinométhyl]-1,1'-binaphtyl.

12. Procédé selon l'une des revendications 1 à 11, **caractérisé en ce que** le composé de métal de transition est choisi parmi les composés du nickel, du cobalt, du fer, du palladium, du platine, du rhodium et de l'iridium, solubles dans l'eau ou capables de passer en solution dans les conditions de la réaction.

13. Procédé selon l'une des revendications 1 à 12, **caractérisé en ce que** le composé de métal de transition est choisi parmi les composés du nickel tels que les carboxylates, notamment acétate, formiate, citrate, de nickel, carbonate de nickel, bicarbonate de nickel, borate de nickel, bromure de nickel, chlorure de nickel, iodure de nickel, thiocyanate de nickel, cyanure de nickel, hydroxyde de nickel, hydrophosphite de nickel, phosphite de nickel, phosphate de nickel et ses dérivés, nitrate de nickel, sulfate de nickel, sulfite de nickel, aryl- et alkyl-sulfonates de nickel.

14. Procédé selon l'une des revendications 1 à 13, **caractérisé en ce que** dans le compartiment cathodique la concentration initiale en phosphine sulfonée se situe entre 10⁻³ mole/litre et 1 mole/litre et la concentration initiale en composé du métal de transition, notamment en composé du nickel, se situe entre 10⁻⁵ mole/litre et 1 mole/litre.

15. Procédé selon l'une des revendications 1 à 14, **caractérisé en ce que** le compartiment cathodique comporte d'autres composés permettant d'augmenter la conductivité de l'électrolyte tels que des sels solubles, des agents complexants susceptibles de modifier le potentiel auquel est effectuée la réduction du métal de transition tels que les cyanures ou les chlorures et des acides de Lewis.

16. Procédé selon la revendication 15, **caractérisé en ce que** l'acide de Lewis mis en oeuvre dans le compartiment cathodique est choisi parmi les composés des éléments des groupes Ib, llb, IIIa, IIIb, IVa, IVb, Va, Vb, VIb, Vllb et VIII de la Classification périodique des éléments, telle que publiée dans Handbook of chemistry and physics, 51st Edition (1970-1971) of The Chemical Rubber Co, dans la mesure où lesdits composés sont au moins partiellement solubles et stables dans l'eau ou plus généralement dans la solution aqueuse à traiter par électrolyse, de préférence parmi les sels, notamment les halogénures, de préférence chlorures et bromures, les sulfates, les nitrates, les sulfonates, notamment les trifluorométhanesulfonates, les carboxylates, les acétylacétonates, les tétrafluoroborates et les phosphates.

17. Procédé selon l'une des revendications 15 ou 16, **caractérisé en ce que** l'acide de Lewis est choisi parmi le chlorure de zinc, le bromure de zinc, l'iodure de zinc, le trifluorométhanesulfonate de zinc, l'acétate de zinc, le nitrate de zinc, le tétrafluoroborate de zinc, le chlorure de manganèse, le bromure de manganèse, le chlorure de nickel, le bromure de nickel, le cyanure de nickel, l'acétylacétonate de nickel, le chlorure de cadmium, le bromure de cadmium, le chlorure stanneux, le bromure stanneux, le sulfate stanneux, le tartrate stanneux, les chlorures, bromures, sulfates, nitrates, carboxylates ou trifluorométhanesulfonates des éléments des terres rares comme le lanthane, le cérium, le praséodyme, le néodyme, le samarium, l'europium, le gadolinium, le terbium, le dysprosium, l'holmium, l'erbium, le thulium, l'ytterbium et le lutétium, le chlorure de cobalt, le chlorure ferreux, le chlorure d'yttrium.

18. Procédé selon l'une des revendications 15 à 17, **caractérisé en ce que** l'acide de Lewis est choisi parmi le chlorure de zinc, le bromure de zinc, le sulfate de zinc, le tétrafluoroborate de zinc, le chlorure stanneux, le bromure stanneux, les mélanges chlorure de zinc/chlorure stanneux, le chlorure de nickel, le bromure de nickel, l'acétylacétonate de nickel.

19. Procédé selon l'une des revendications 1 à 18, **caractérisé en ce que** l'acide de Lewis représente de 0 à 50 moles par mole de composé de métal de transition, plus particulièrement de composé du nickel, et de préférence de 0 à 10 moles par mole.

20. Procédé selon l'une des revendications 1 à 19, **caractérisé en ce que** le compartiment anodique contient une solution aqueuse d'un anolyte constitué par un acide tel que notamment l'acide sulfurique, l'acide nitrique, les acides carboxyliques solubles dans l'eau comme l'acide acétique, par les sels correspondants tels que de sodium, de potassium, d'ammonium ou d'ammonium quaternaire ou par une base telle que la soude ou la potasse, de préférence l'anolyte étant choisi parmi l'acide sulfurique et ses sels.

21. Procédé selon l'une des revendications 1 à 19, **caractérisé en ce que** le compartiment anodique contient une solution aqueuse d'un anolyte constitué par une ou plusieurs phosphines hydrosolubles monodentates ou bidentates.

22. Procédé selon l'une des revendications 1 à 21, **caractérisé en ce que** la concentration initiale de l'anolyte dans la solution du compartiment anodique est de 10⁻³ mole/litre à 3 moles/litre.

23. Procédé selon l'une des revendications 1 à 22, **caractérisé en ce qu'**il consiste à mettre en oeuvre dans le compartiment cathodique une solution aqueuse d'un catalyseur usé, à base de phosphine hydrosoluble monodentate ou bidentate et d'un métal de transition, et plus particulièrement le nickel, transformé au moins en partie en cyanure, ledit catalyseur usé contenant aussi éventuellement un ou plusieurs acides de Lewis, et ladite solution pouvant contenir des quantités relativement faibles de composés comme le butadiène et/ou les pentène-nitriles ou comme l'adiponitrile, le méthyl-glutaronitrile, l'éthyl-succinonitrile, les méthylbutène-nitriles.

## Claims

1. Process for the electrochemical preparation of catalysts containing at least one transition metal in oxidation state 0 or 1, combined with at least one monodentate or bidentate water-soluble phosphine, **characterized in that** it consists of the electrolytic treatment of an aqueous solution containing at least one transition metal compound and at least one monodentate or bidentate water-soluble phosphine, placed in the cathode compartment of an electrolysis cell of an electrolyser, the monodentate phosphine corresponding to the general formula (I):
P(Ar1)ₐ(Ar2)_{b}(Ar3)_{c}(D1)_{d}(D2)ₑ(D3)_{f} (I)
in which:
- Ar1 and Ar2, which may be identical or different, represent aryl groups or aryl groups containing one or more substituents such as:
- alkyl or alkoxy radical having 1 to 4 carbon atoms,
- halogen atom,
- nitrile group,
- nitro group,
- hydrophilic group such as:
-COOM, -SO₃M, -PO₃M, M representing an inorganic or organic cationic residue chosen from a proton, cations derived from alkali metals or alkaline-earth metals, ammonium cations -N(R)₄ in which formula the symbols R, which may be identical or different, represent a hydrogen atom or an alkyl radical having from 1 to 4 carbon atoms, the other cations derived from metals whose arylcarboxylic acid, arylsulphonic acid or arylphosphonic acid salts are water-soluble,
-N(R)₃ in which formula the symbols R, which may be identical or different, represent a hydrogen atom or an alkyl radical having from 1 to 4 carbon atoms,
-OH
- Ar3 represents an aryl group containing one or more substituents such as:
- alkyl or alkoxy radical having 1 to 4 carbon atoms,
- halogen atom,
- nitrile group,
- nitro group,
- hydrophilic group such as:
-COOM, -PO₃M, M representing an inorganic or organic cationic residue chosen from a proton, cations derived from alkali metals or alkaline-earth metals, ammonium cations -N(R)₄ in which formula the symbols R, which may be identical or different, represent a hydrogen atom or an alkyl radical having from 1 to 4 carbon atoms, the other cations derived from metals whose arylcarboxylic acid or arylphosphonic acid salts are water-soluble,
-N(R)₃ in which formula the symbols R, which may be identical or different, represent a hydrogen atom or an alkyl radical having from 1 to 4 carbon atoms,
-OH
at least one of the said substituents of Ar3 being a hydrophilic group as defined above,
- a represents 0 or 1,
- b represents 0 or 1,
- c represents 0 or 1,
- D1, D2 and D3, which may be identical or different, represent an alkyl group, a cycloalkyl group or an alkyl or cycloalkyl group containing one or more substituents such as:
- alkoxy radical having 1 to 4 carbon atoms,
- halogen atom,
- nitrile group,
- nitro group,
- hydrophilic group such as:
-COOM, -SO₃M, -PO₃M, M representing an inorganic or organic cationic residue chosen from a proton, cations derived from alkali metals or alkaline-earth metals, ammonium cations -N(R)₄ in which formula the symbols R, which may be identical or different, represent a hydrogen atom or an alkyl radical having from 1 to 4 carbon atoms, the other cations derived from metals whose carboxylic acid, sulphonic acid or phosphonic acid salts are water-soluble,
-N(R)₃ in which formula the symbols R, which may be identical or different, represent a hydrogen atom or an alkyl radical having from 1 to 4 carbon atoms,
-OH
- d, e and f represent 0 or 1,
- the sum (a+b+c+d+e+f) is equal to 3
- and when one of the substituents of a radical Ar₁ or Ar₂ is -SO₃M, the other radicals Ar₁, Ar₂ and Ar₃ cannot be substituted with an alkyl, alkoxy, halogen, CN, NO₂, OH, N(R)₃ or SO₃M radical,
or a bidentate phosphine corresponding to the general formula (II):
(Ar1)ₐ(Ar2)_{b}(D1)_{d}(D2)ₑP-L-P(Ar1)_{g}(Ar2)ₕ(D1)ᵢ(D2)ⱼ (II)
in which:
- Ar1, Ar2, D1 and D2 have the meanings given above for formula (I),
- a, b, d, e, g, h, i and j each represent 0 or 1,
- the sum (a+b+d+e) is equal to 2,
- the sum (g+h+i+j) is equal to 2,
- L represents a single valency bond or a divalent hydrocarbon-based radical such as an alkylene radical, a cycloalkylene radical, an arylene radical, a radical derived from a heterocycle containing one or two oxygen, nitrogen or sulphur atoms in the ring, these various cyclic radicals being directly attached to one of the phosphorus atoms or to the two phosphorus atoms or being attached to one of the phosphorus atoms or to the two via a linear or branched alkylene radical having from 1 to 4 carbon atoms, it being possible for the ring(s) which may form part of the divalent radical L to contain one or more substituents as defined for Ar₁, Ar₂, D₁ and D₂.

2. Process according to Claim 1, **characterized in that** the electrolysis cell of the electrolyser contains a cathode compartment and an anode compartment separated by a separating member consisting of an ionexchange membrane or a porous diaphragm.

3. Process according to either of Claims 1 and 2, **characterized in that** the cathode of the electrolysis cell is made of a material such as platinum, gold, iridium, ruthenium, palladium, nickel, graphite, vitreous carbon, iron, a stainless steel, a special steel, lead, mercury or an amalgam, or consists of titanium, tantalum, nickel or a stainless steel, coated with a layer of platinum, gold, iridium or ruthenium, with a mixture of several of these metals, with platinum oxide, palladium oxide, iridium oxide, rhodium oxide, ruthenium oxide, osmium oxide or tantalum oxide, or with a mixture of several of these oxides.

4. Process according to one of Claims 1 to 3, **characterized in that** the cathode and the anode of the electrolysis cell have a flat structure such as a plate or grille or a voluminous structure, and **in that** they are perforated or unfolded.

5. Process according to one of Claims 1 to 4, **characterized in that** the cathode or the anode has a voluminous structure chosen from granular piles of the materials constituting it, felts or foams of these said materials.

6. Process according to one of Claims 1 to 5, **characterized in that** the anode is a material such as platinum, gold, iridium, ruthenium, palladium, nickel, graphite, vitreous carbon, a stainless steel, a special steel or lead, or consists of titanium or tantalum coated with a layer of platinum, gold, iridium, ruthenium, with a mixture of several of these metals, with platinum oxide, palladium oxide, iridium oxide, rhodium oxide, ruthenium oxide, osmium oxide or tantalum oxide, or with a mixture of several of these oxides.

7. Process according to one of Claims 1 to 6, **characterized in that** the separating member is chosen from membranes of cationic type, prepared from cation-exchange resins containing acidic groups, such as sulphonic groups or carboxylic groups, and preferably from membranes prepared with sulphonic resins.

8. Process according to one of Claims 1 to 6, **characterized in that** the separating member is chosen from diaphragms made of porous ceramic, diaphragms made of woven or nonwoven synthetic fibres, and deposited diaphragms based on asbestos fibres or synthetic fibres.

9. Process according to one of Claims 1 to 8, **characterized in that** the preferred water-soluble phosphines are the phosphines of formula (I) or of formula (II) in which Ar1 and Ar2 are phenyl groups or phenyl groups containing one or two substituents as defined in Claim 1, Ar3 is a phenyl group containing one or two substituents as defined above in Claim 1, D1, D2 and D3, which may be identical or different, represent an alkyl group having from 1 to 6 carbon atoms, a cycloalkyl group having 5 to 8 carbon atoms, an alkyl group having from 1 to 6 carbon atoms or cycloalkyl group having 5 to 8 carbon atoms containing one or more substituents as defined above in Claim 1, L is a single valency bond, an alkylene radical having from 1 to 6 carbon atoms, a monocyclic or bicyclic cycloalkylene radical having from 4 to 12 carbon atoms, a phenylene radical, a diphenylene radical, a naphthylene radical, a dinaphthylene radical, a radical derived from a heterocycle containing one or two oxygen, nitrogen or sulphur atoms in the ring, these various cyclic radicals being directly attached to one of the phosphorus atoms or to the two phosphorus atoms or being attached to one of the phosphorus atoms or to the two via a linear or branched alkylene radical having from 1 to 4 carbon atoms, it being possible for the ring(s) which may form part of the divalent radical L to contain one or more substituents such as an alkyl group having 1 to 4 carbon atoms.

10. Process according to one of Claims 1 to 9, **characterized in that** the preferred water-soluble phosphines are the phosphines of formula (I) or of formula (II) in which:
- the substituent(s) of Ar1 and Ar2, which may be identical or different, represent(s) groups such as:
- alkyl or alkoxy radical having 1 to 2 carbon atoms,
- chlorine atom,
- hydrophilic group such as:
-COOM, -SO₃M, -PO₃M, M representing an inorganic or organic cationic residue chosen from a proton, cations derived from sodium, potassium, calcium or barium, ammonium, tetramethylammonium, tetraethylammonium, tetrapropylammonium and tetrabutylammonium cations, cations derived from zinc, lead or tin,
-N(R)₃ in which formula the symbols R, which may be identical or different, represent a hydrogen atom or an alkyl radical having from 1 to 4 carbon atoms,
-OH
- the substituent(s) of Ar3, which may be identical or different, represent(s) groups such as:
- alkyl or alkoxy radical having 1 to 2 carbon atoms,
- chlorine atom,
- hydrophilic group such as:
-COOM, -PO₃M, M representing an inorganic or organic cationic residue chosen from a proton, cations derived from sodium, potassium, calcium or barium, ammonium, tetramethylammonium, tetraethylammonium, tetrapropylammonium and tetrabutylammonium cations, cations derived from zinc, lead or tin,
-N(R)₃ in which formula the symbols R, which may be identical or different, represent a hydrogen atom or an alkyl radical having from 1 to 4 carbon atoms,
-OH
overall, at least two of the said substituents of Ar1, Ar2, Ar3, D1, D2 and D3 for the phosphines of formula (I) and of Ar1, Ar2, D1 and D2 for the phosphines of formula (II) being a hydrophilic group as defined above.

11. Process according to one of Claims 1 to 10, **characterized in that** the monodentate water-soluble phosphine of general formula (I) is chosen from tris-(hydroxymethyl)phosphine, tris(2-hydroxyethyl)-phosphine, tris(3-hydroxypropyl)phosphine, tris-(2-carboxymethyl)phosphine, the sodium salt of tris-(3-carboxyphenyl)phosphine, tris(3-carboxyethyl)-phosphine, tris(4-trimethylammoniophenyl)phosphine iodide, the sodium salt of tris(2-phosphoethyl)-phosphine, bis(2-carboxyethyl)phenylphosphine, hydroxymethyl bis(2-hydroxyethyl)phosphine, the sodium salt of tris(para-phosphophenyl)phosphine, the sodium salt of bis(meta-sulphophenyl)-para-carboxyphenylphosphine and the sodium salt of bis(meta-sulphophenyl)-2-sulphoethylphosphine, and the bidentate phosphine of general formula (II) is chosen from the sodium salt of 2,2'-bis[di(sulphonatophenyl)phosphino]-1,1'-binaphthyl, the sodium salt of 1,2-bis[di-(sulphonatophenyl)phosphinomethyl]cyclobutane (CBDTS), 1,2-bis(dihydroxymethylphosphino)ethane, 1,3-bis(dihydroxymethylphosphino)propane and the sodium salt of 2,2'-bis[di(sulphonatophenyl)phosphinomethyl]-1,1'-binaphthyl.

12. Process according to one of Claims 1 to 11, **characterized in that** the transition metal compound is chosen from nickel, cobalt, iron, palladium, platinum, rhodium and iridium compounds which are water-soluble or capable of dissolving under the reaction conditions.

13. Process according to one of Claims 1 to 12, **characterized in that** the transition metal compound is chosen from nickel compounds such as nickel carboxylates, in particular nickel acetate, nickel formate and nickel citrate, nickel carbonate, nickel bicarbonate, nickel borate, nickel bromide, nickel chloride, nickel iodide, nickel thiocyanate, nickel cyanide, nickel hydroxide, nickel hydrophosphite, nickel phosphite, nickel phosphate and its derivatives, nickel nitrate, nickel sulphate, nickel sulphite, nickel arylsulphonates and nickel alkylsulphonates.

14. Process according to one of Claims 1 to 13, **characterized in that**, in the cathode compartment, the initial concentration of sulphone-containing phosphine is between 10⁻³ mol/litre and 1 mol/litre and the initial concentration of transition metal compound, in particular of nickel compound, is between 10⁻⁵ mol/litre and 1 mol/litre.

15. Process according to one of Claims 1 to 14, **characterized in that** the cathode compartment contains other compounds which allow the electrolyte conductivity to be increased, such as soluble salts and complexing agents capable of modifying the potential at which the reduction of the transition metal is carried out, such as cyanides or chlorides and Lewis acids.

16. Process according to Claim 15, **characterized in that** the Lewis acid used in the cathode compartment is chosen from compounds of the elements from groups Ib, IIb, IIIa, IIIb, IVa, IVb, Va, Vb, VIb, VIIb and VIII of the Periodic Table of the Elements, as published in the Handbook of Chemistry and Physics, 51st edition (1970-1971) of The Chemical Rubber Co., provided that the said compounds are at least partially soluble and stable in water or more generally in the aqueous solution to be treated by electrolysis, preferably from salts, in particular halides, preferably chlorides and bromides, sulphates, nitrates, sulphonates, in particular trifluoromethanesulphonates, carboxylates, acetylacetonates, tetrafluoroborates and phosphates.

17. Process according to either of Claims 15 and 16, **characterized in that** the Lewis acid is chosen from zinc chloride, zinc bromide, zinc iodide, zinc trifluoromethanesulphonate, zinc acetate, zinc nitrate, zinc tetrafluoroborate, manganese chloride, manganese bromide, nickel chloride, nickel bromide, nickel cyanide, nickel acetylacetonate, cadmium chloride, cadmium bromide, stannous chloride, stannous bromide, stannous sulphate, stannous tartrate, chlorides, bromides, sulphates, nitrates, carboxylates or trifluoromethanesulphonates of rare-earth elements such as lanthanum, cerium, praseodymium, neodymium, samarium, europium, gadolinium, terbium, dysprosium, holmium, erbium, thulium, ytterbium and lutetium, cobalt chloride, ferrous chloride or yttrium chloride.

18. Process according to one of Claims 15 to 17, **characterized in that** the Lewis acid is chosen from zinc chloride, zinc bromide, zinc sulphate, zinc tetrafluoroborate, stannous chloride, stannous bromide, zinc chloride/stannous chloride mixtures, nickel chloride, nickel bromide and nickel acetylacetonate.

19. Process according to one of Claims 1 to 18, **characterized in that** the Lewis acid represents from 0 to 50 mol per mole of transition metal compound, more particularly of nickel compound, and preferably from 0 to 10 mol per mole.

20. Process according to one of Claims 1 to 19, **characterized in that** the anode compartment contains an aqueous solution of an anolyte consisting of an acid such as, in particular, sulphuric acid, nitric acid, water-soluble carboxylic acids such as acetic acid, of the corresponding salts, such as the sodium, potassium, ammonium or quaternary ammonium salts, or of a base such as sodium hydroxide or potassium hydroxide, the anolyte preferably being chosen from sulphuric acid and its salts.

21. Process according to one of Claims 1 to 19, **characterized in that** the anode compartment contains an aqueous solution of an anolyte consisting of one or more monodentate or bidentate water-soluble phosphines.

22. Process according to one of Claims 1 to 21, **characterized in that** the initial concentration of the anolyte in the solution in the anode compartment is from 10⁻³ mol/litre to 3 mol/litre.

23. Process according to one of Claims 1 to 22, **characterized in that** it consists in using, in the cathode compartment, an aqueous solution of a spent catalyst, based on monodentate or bidentate water-soluble phosphine and on a transition metal, and more particularly nickel, converted at least partly into cyanide, the said spent catalyst also optionally containing one or more Lewis acids, and it being possible for the said solution to contain relatively low amounts of compounds such as butadiene and/or pentenenitriles or such as adiponitrile, methylglutaronitrile, ethylsuccinonitrile or methylbutenenitriles.

## Patentansprüche

1. Verfahren zur elektrochemischen Herstellung von Katalysatoren, die mindestens ein Übergangsmetall in der Oxidationsstufe 0 oder 1 enthalten, das mit mindestens einem wasserlöslichen ein- oder zweizähnigen Phosphin assoziiert ist, **dadurch gekennzeichnet, dass** es darin besteht, eine wässerige Lösung, die mindestens eine Übergangsmetallverbindung und mindestens ein wasserlösliches ein- oder zweizähniges Phosphin enthält und die im Kathodenraum der Elektrolysezelle eines Elektrolysegeräts vorgelegt wird, einer Elektrolyse zu unterziehen, wobei es sich bei dem besagten Phosphin entweder um ein einzähniges Phosphin handelt, das der folgenden allgemeinen Formel (I) entspricht:
P (Ar1)ₐ (Ar2)_{b} (Ar3)ₑ (D1)_{d} (D2)ₑ (D3)_{f} (I),
in der:
- Ar1 und Ar2, die gleich oder verschieden sein können, jeweils eine nicht substituierte Arylgruppe oder eine ein- oder mehrfach substituierte Arylgruppe darstellen, wobei als Beispiele für mögliche Substituenten zu nennen sind:
• ein Alkyl- oder Alkoxyrest mit 1 bis 4 Kohlenstoffatomen,
• ein Halogenatom,
• eine Nitrilgruppe,
• eine Nitrogruppe,
• eine hydrophile Gruppe, wie:
* -COOM₂ -SO₃M oder -PO₃M, wobei M einen anorganischen oder organischen kationischen Rest darstellt, der ausgewählt ist unter dem Proton, den von Alkali- oder Erdalkalimetallen abgeleiteten Kationen, den Ammoniumkationen -N(R)₄, in deren Formel die Symbole R, die die gleiche oder verschiedene Bedeutungen haben können, jeweils ein Wasserstoffatom oder einen Alkylrest mit 1 bis 4 Kohlenstoffatomen darstellen, sowie den anderen von Metallen abgeleiteten Kationen, deren Arylcarbonsäure-, Arylsulfonsäure- oder Arylphosphonsäuresalze in Wasser löslich sind,
* -N(R)₃, in dessen Formel die Symbole R, die die gleiche oder verschiedene Bedeutungen haben können, jeweils ein Wasserstoffatom oder einen Alkylrest mit 1 bis 4 Kohlenstoffatomen darstellen, oder
* -OH;
- Ar3 eine Arylgruppe darstellt, die einen oder mehrere Substituenten trägt, wobei als Beispiele für mögliche Substituenten zu nennen sind:
• ein Alkyl- oder Alkoxyrest mit 1 bis 4 Kohlenstoffatomen,
• ein Halogenatom,
• eine Nitrilgruppe,
• eine Nitrogruppe,
• eine hydrophile Gruppe, wie:
* -COOM oder -PO₃M, wobei M einen anorganischen oder organischen kationischen Rest darstellt, der ausgewählt ist unter dem Proton, den von Alkali- oder Erdalkalimetallen abgeleiteten Kationen, den Ammoniumkationen -N(R)₄, in deren Formel die Symbole R, die die gleiche oder verschiedene Bedeutungen haben können, jeweils ein Wasserstoffatom oder einen Alkylrest mit 1 bis 4 Kohlenstoffatomen darstellen, sowie den anderen von Metallen abgeleiteten Kationen, deren Arylcarbonsäure- oder Arylphosphonsäuresalze in Wasser löslich sind,
* -N(R)₃, in dessen Formel die Symbole R, die die gleiche oder verschiedene Bedeutungen haben können, jeweils ein Wasserstoffatom oder einen Alkylrest mit 1 bis 4 Kohlenstoffatomen darstellen, oder
* -OH;
wobei mindestens einer dieser Substituenten von Ar3 eine hydrophile Gruppe wie oben definiert ist;
- a 0 oder 1 darstellt;
- b 0 oder 1 darstellt;
- c 0 oder 1 darstellt;
- D1, D2 und D3, die gleich oder verschieden sein können, jeweils eine nicht substituierte Alkyl- oder Cycloalkylgruppe oder eine ein- oder mehrfach substituierte Alkyl- oder Cycloalkylgruppe darstellen, wobei als Beispiele für mögliche Substituenten zu nennen sind:
• ein Alkoxyrest mit 1 bis 4 Kohlenstoffatomen,
• ein Halogenatom,
• eine Nitrilgruppe,
• eine Nitrogruppe,
• eine hydrophile Gruppe, wie:
* -COOM, -SO₃M oder -PO₃M, wobei M einen anorganischen oder organischen kationischen Rest darstellt, der ausgewählt ist unter dem Proton, den von Alkali- oder Erdalkalimetallen abgeleiteten Kationen, den Ammoniumkationen -N(R)₄, in deren Formel die Symbole R, die die gleiche oder verschiedene Bedeutungen haben können, jeweils ein Wasserstoffatom oder einen Alkylrest mit 1 bis 4 Kohlenstoffatomen darstellen, sowie den anderen von Metallen abgeleiteten Kationen, deren Arylcarbonsäure-, Arylsulfonsäure- oder Arylphosphonsäuresalze in Wasser löslich sind,
* -N(R)₃, in dessen Formel die Symbole R, die die gleiche oder verschiedene Bedeutungen haben können, jeweils ein Wasserstoffatom oder einen Alkylrest mit 1 bis 4 Kohlenstoffatomen darstellen, oder
* -OH;
- d, e und f jeweils 0 oder 1 darstellen;
- die Summe (a+b+c+d+e+f) gleich 3 ist;
- in den Fällen, wenn einer der Substituenten eines Restes Ar1, Ar2 für -SO₃M steht, die anderen Reste Ar1, Ar2, Ar3 nicht mit einem der folgenden Reste substituiert sein können: Alkyl, Alkoxy, Halogen, CN, NO₂, OH, N(R)₃, SO₃M;
oder um ein zweizähniges Phosohin, das der folgenden allgemeinen Formel (II) entspricht:
(Ar1)ₐ(Ar2)_{b}(D1)_{d}(D₂)ₑ P L P (Ar1)_{g}(Ar2)ₕ(D1)ᵢ(D2)ⱼ (II),
in der:
- Ar1 Ar2, D1 und D2 die gleichen Bedeutungen haben wie oben für die Formel (I) angegeben;
- a, b, d, e, g, h, i und j jeweils 0 oder 1 darstellen,
- die Summe (a + b + d + e) gleich 2 ist,
- die Summe (g + h + i + j) gleich 2 ist und
- L eine einfache Valenzbindung oder einen zweiwertigen Kohlenwasserstoffrest, wie einen Alkylenrest, einen Cycloalkylenrest, einen Arylenrest, oder einen von einem Heterozyklus abgeleiteten Rest, der in seinem Ring ein oder zwei Sauerstoff-, Stickstoff- oder Schwefelatome aufweist, darstellt, wobei diese verschiedenen zyklischen Reste direkt oder über einen geradkettigen oder verzweigten Alkylenrest mit 1 bis 4 Kohlenstoffatomen an eines der beiden Phosphoratome oder an beide Phosphoratome gebunden sind und wobei der beziehungsweise die Ringe, die gegebenenfalls Bestandteil des zweiwertigen Restes L sind, einen oder mehrere Substituenten, wie die für Ar1, Ar2, D1 und D2 definierten Substituenten, tragen können.

2. Verfahren nach Anspruch 1, **dadurch gekennzeichnet, dass** die Elektrolysezelle des Elektrolysegeräts einen Kathodenraum und einen Anodenraum aufweist, die durch ein Trennelement, bestehend aus einer porösen Ionenaustauschermembran oder einem porösen Diaphragma, voneinander getrennt sind.

3. Verfahren nach einem der Ansprüche 1 oder 2, **dadurch gekennzeichnet, dass** die Kathode der Elektrolysezelle aus einem Material wie Platin, Gold, Iridium, Ruthenium, Palladium, Nickel, Graphit, Glaskohlenstoff, Eisen, einem nichtoxidierenden Stahl, einem Spezialstahl, Blei, Quecksilber oder einem Amalgam besteht oder dass sie aus Titan, Tantal, Nickel oder einem nichtoxidierenden Stahl besteht, das (der) mit einer Schicht aus Platin, Gold, Iridium, Ruthenium, aus einem Gemisch mehrerer dieser Metalle, aus Platin-, Palladium-, Iridium-, Rhodium-, Ruthenium-, Osmium- oder Tantaloxid oder aus einem Gemisch mehrerer dieser Oxide überzogen ist.

4. Verfahren nach einem der Ansprüche 1 bis 3, **dadurch gekennzeichnet, dass** die Kathode und die Anode der Elektrolysezelle eine ebene Struktur, wie im Falle einer Platte oder eines Gitters, oder eine dreidimensionale Stuktur aufweisen und dass sie perforiert oder aufgefaltet sind.

5. Verfahren nach einem der Ansprüche 1 bis 4, **dadurch gekennzeichnet, dass** die Kathode oder die Anode eine dreidimensionale Struktur aufweist, die unter den körnigen Packungen der Materialien, aus denen die betreffende Elektrode besteht, den Filzen und den Schäumen dieser Materialien ausgewählt ist.

6. Verfahren nach einem der Ansprüche 1 bis 5, **dadurch gekennzeichnet, dass** die Anode aus einem Material wie Platin, Gold, Iridium, Ruthenium, Palladium, Nickel, Graphit, Glaskohlenstoff, einem nichtoxidierenden Stahl, einem Spezialstahl oder Blei besteht oder dass sie aus Titan oder Tantal besteht, das mit einer Schicht aus Platin, Gold, Iridium, Ruthenium, einem Gemisch mehrerer dieser Metalle, aus Platin-, Palladium-, Iridium-, Rhodium-, Ruthenium-, Osmium- oder Tantaloxid oder aus einem Gemisch mehrerer dieser Oxide überzogen ist.

7. Verfahren nach einem der Ansprüche 1 bis 6, **dadurch gekennzeichnet, dass** das Trennelement unter den Membranen des kationischen Typs, die aus Kationenaustauscherharzen mit sauren Gruppen, wie mit Sulfonsäure- oder Carbonsäuregruppen, hergestellt werden, und vorzugsweise unter den aus Sulfonsäureharzen hergestellten Membranen ausgewählt ist.

8. Verfahren nach einem der Ansprüche 1 bis 6, **dadurch gekennzeichnet, dass** das Trennelement unter den Diaphragmen aus poröser Keramik, den Diaphragmen aus gewebten oder nicht gewebten synthetischen Fasern und den aus Amiantfasern oder synthetischen Fasern abgeschiedenen Diaphragmen ausgewählt ist.

9. Verfahren nach einem der Ansprüche 1 bis 8, **dadurch gekennzeichnet, dass** unter den wasserlöslichen Phosphinen die Phosphine der Formel (I) oder der Formel (II) bevorzugt werden, in denen:
Ar1 und Ar2 Phenylgruppen sind, die gegebenenfalls einen oder zwei Substituenten wie in Anspruch 1 definiert tragen,
Ar3 eine Phenylgruppe ist, die einen oder zwei Substituenten wie oben in Anspruch 1 definiert trägt,
D1, D2 und D3, die gleich oder verschieden sein können, jeweils eine Alkylgruppe mit 1 bis 6 Kohlenstoffatomen, eine Cycloalkylgruppe mit 5 bis 8 Kohlenstoffatomen, eine Alkylgruppe mit 1 bis 6 Kohlenstoffatomen, die einen oder mehrere Substituenten wie oben in Anpruch 1 definiert trägt, oder eine Cycloalkylgruppe mit 5 bis 8 Kohlenstoffatomen, die einen oder mehrere Substituenten wie oben in Anpruch 1 definiert trägt, darstellen,
L eine einfache Valenzbindung, ein Alkylenrest mit 1 bis 6 Kohlenstoffatomen, ein mono- oder bizyklischer Cycloalkylenrest mit 4 bis 12 Kohlenstoffatomen, ein Phenylenrest, ein Diphenylenrest, ein Naphthylenrest, ein Dinaphthylenrest oder ein von einem Heterozyklus, der in seinem Ring ein oder zwei Sauerstoff-, Stickstoff- oder Schwefelatome aufweist, abgeleiteter Rest ist, wobei diese verschiedenen zyklischen Reste direkt oder über einen geradkettigen oder verzweigten Alkylenrest mit 1 bis 4 Kohlenstoffatomen an eines der beiden Phosphoratome oder an beide Phosphoratome gebunden sind und wobei der beziehungsweise die Ringe, die gegebenenfalls Bestandteil des zweiwertigen Restes L sind, einen oder mehrere Substituenten, wie eine Alkylgruppe mit 1 bis 4 Kohlenstoffatomen, tragen können.

10. Verfahren nach einem der Ansprüche 1 bis 9, **dadurch gekennzeichnet, dass** unter den wasserlöslichen Phosphinen die Phosphine der Formel (I) oder der Formel (II) bevorzugt werden, in denen:
- der beziehungsweise die Substituenten von Ar1 und Ar2, die gleich oder verschieden sein können, Gruppen wie beispielsweise folgende darstellen:
• einen Alkyl- oder Alkoxyrest mit 1 bis 2 Kohlenstoffatomen,
• ein Chloratom,
• eine hydrophile Gruppe, wie:
* -COOM, -SO₃M oder -PO₃M, wobei M einen anorganischen oder organischen kationischen Rest darstellt, der ausgewählt ist unter dem Proton, den von Natrium, Kalium, Calcium und Barium abgeleiteten Kationen, dem Ammonium-, dem Tetramethylammonium-, dem Tetraethylammonium-, dem Tetrapropylammonium- und dem Tetrabutylammoniumkation und den von Zink, Blei und Zinn abgeleiteten Kationen,
* -N(R)₃, in dessen Formel die Symbole R, die die gleiche oder verschiedene Bedeutungen haben können, jeweils ein Wasserstoffatom oder einen Alkylrest mit 1 bis 4 Kohlenstoffatomen darstellen, oder
* -OH;
- der beziehungsweise die Substituenten von Ar3, die gleich oder verschieden sein können, Gruppen wie beispielsweise folgende darstellen:
• einen Alkyl- oder Alkoxyrest mit 1 bis 2 Kohlenstoffatomen,
• ein Chloratom,
• eine hydrophile Gruppe, wie:
* -COOM oder -PO₃M, wobei M einen anorganischen oder organischen kationischen Rest darstellt, der ausgewählt ist unter dem Proton, den von Natrium, Kalium, Calcium und Barium abgeleiteten Kationen, dem Ammonium-, dem Tetramethylammonium-, dem Tetraethylammonium-, dem Tetrapropylammonium- und dem Tetrabutylammoniumkation und den von Zink, Blei und Zinn abgeleiteten Kationen,
* -N(R)₃, in dessen Formel die Symbole R, die die gleiche oder verschiedene Bedeutungen haben können, jeweils ein Wasserstoffatom oder einen Alkylrest mit 1 bis 4 Kohlenstoffatomen darstellen, oder
* -OH;
wobei insgesamt mindestens zwei der besagten Substituenten von Ar1, Ar2, Ar3, D1, D2 und D3 im Falle der Phosphine der Formel (I) beziehungsweise von Ar1, Ar2, D1 und D2 im Falle der Phosphine der Formel (II) eine hydrophile Gruppe wie oben definiert darstellen.

11. Verfahren nach einem der Ansprüche 1 bis 10, **dadurch gekennzeichnet, dass** das wasserlösliche einzähnige Phosphin der allgemeinen Formel (I) unter dem Tris(hydroxymethyl)-phosphin, dem Tris-(2-hydroxyethyl)-phosphin, dem Tris-(3-hydroxypropyl)-phosphin, dem Tris-(2-carboxymethyl)-phosphin, dem Natriumsalz des Tris(3-carboxyphenyl)-phosphins, dem Tris-(3-carboxyethyl)-phosphin, dem Iodid des Tris-(4-trimethylammoniumphenyl)-phosphins, dem Natriumsalz des Tris-(2-phosphoethyl)-phosphins, dem Bis-(2-carboxyethyl)-phenyl-phosphin, dem Hydroxymethyl-bis-(2-hydroxyethyl)-phosphin, dem Natriumsalz des Tris-(para-phosphophenyl)-phosphins, dem Natriumsalz des Bis-(meta-sulfophenyl)-para-carboxyphenyl-phosphins und dem Natriumsalz des Bis-(meta-sulfophenyl)-sulfo-2-ethyl-phosphins ausgewählt ist beziehungsweise das wasserlösliche zweizähnige Phosphin der allgemeinen Formel (II) unter dem Natriumsalz des 2,2'-Bis-[di-(sulfonatophenyl)-phosphino]-1,1'-binaphthyls, dem Natriumsalz des 1,2-Bis-[di-(sulfonatophenyl)-phosphinomethyl]-cyclobutans (CBDTS), dem 1,2-Bis-(dihydroxymethyl-phosphino)-ethan, dem 1,3-Bis-(dihydroxymethylphosphino)-propan und dem Natriumsalz des 2,2'-Bis-[di-(sulfonatophenyl)-phosphinomethyl]-1,1'-binaphthyls ausgewählt ist.

12. Verfahren nach einem der Ansprüche 1 bis 11, **dadurch gekennzeichnet, dass** die Übergangsmetallverbindung unter den Nickel-, Kobalt-, Eisen-, Palladium-, Platin-, Rhodium- und Iridiumverbindungen ausgewählt ist, die in Wasser löslich sind oder die befähigt sind, unter den Reaktionsbedingungen in Lösung zu gehen.

13. Verfahren nach einem der Ansprüche 1 bis 12, **dadurch gekennzeichnet, dass** die Übergangsmetallverbindung unter den Verbindungen des Nickels, wie den Carboxylaten, und zwar insbesondere dem Acetat, dem Formiat und dem Citrat des Nickels, dem Nickelcarbonat, dem Nickelhydrogencarbonat, dem Nickelborat, dem Nickelbromid, dem Nickelchlorid, dem Nickeliodid, dem Nickelthiocyanat, dem Nickelcyanid, dem Nickelhydroxid, dem Nickelhydrophosphit, dem Nickelphosphit, dem Nickelphosphat und seinen Derivaten, dem Nickelnitrat, dem Nickelsulfat, dem Nickelsulfit und den Aryl- und Alkylsulfonaten des Nickels ausgewählt ist.

14. Verfahren nach einem der Ansprüche 1 bis 13, **dadurch gekennzeichnet, dass** im Kathodenraum die Ausgangskonzentration des sulfonierten Phosphins im Bereich von 10⁻³ mol/l bis 1 mol/l liegt und die Ausgangskonzentration der Übergangsmetallverbindung, insbesondere der Nickelverbindung, im Bereich von 10⁻⁵ mol/l bis 1 mol/l liegt.

15. Verfahren nach einem der Ansprüche 1 bis 14, **dadurch gekennzeichnet, dass** der Kathodenraum weitere Verbindungen, die der Erhöhung der Leitfähigkeit des Elektrolyten dienen, wie lösliche Salze, sowie Komplexbildner, durch die das Potential, bei der die Reduktion des Übergangsmetalls erfolgt, erniedrigt werden kann, wie Cyanide und Chloride, und Lewis-Säuren enthält.

16. Verfahren nach Anspruch 15, **dadurch gekennzeichnet, dass** die im Kathodenraum eingesetzte Lewis-Säure unter den Verbindungen der Elemente der Gruppen Ib, IIb, IIIa, IIIb, IVa, IVb, Va, Vb, VIb, VIIb und VIII des Periodensystems der Elemente wie in *Handbook of chemistry and physics, 51st Edition (1970-1971). The Chemical Rubber Co*., veröffentlicht, mit der Maßgabe, dass diese Verbindungen zumindest teilweise in Wasser beziehungsweise, allgemeiner ausgedrückt, in der elektrolytisch zu behandelnden wässerigen Lösung löslich und stabil sein müssen, und vorzugsweise unter den Salzen, insbesondere den Halogeniden und zwar vorzugsweise den Chloriden und Bromiden, den Sulfaten, den Nitraten, den Sulfonaten, insbesondere den Trifluormethansulfonaten, den Carboxylaten, den Acetylacetonaten, den Tetrafluoroboraten und den Phosphaten ausgewählt ist.

17. Verfahren nach einem der Ansprüche 15 und 16, **dadurch gekennzeichnet, dass** die Lewis-Säure unter dem Zinkchlorid, dem Zinkbromid, dem Zinkiodid, dem Zinktrifluormethansulfonat, dem Zinkacetat, dem Zinknitrat, dem Zinktetrafluoroborat, dem Manganchlorid, dem Manganbromid, dem Nickelchlorid, dem Nickelbromid, dem Nickelcyanid, dem Nickelacetylacetonat, dem Cadmiumchlorid, dem Cadmiumbromid, dem Zinnchlorid, dem Zinnbromid, dem Zinnsulfat, dem Zinntartrat, den Chloriden, Bromiden, Sulfaten, Nitraten, Carboxylaten und Trifluormethansulfonaten der Elemente der Seltenen Erden, wie des Lanthans, des Cers, des Praseodyms, des Neodyms, des Samariums, des Europiums, des Gadoliniums, des Therbiums, des Dysprosiums, des Holmiums, des Erbiums, des Thulliums, des Ytterbiums und des Lutetiums, sowie dem Kobaltchlorid, dem Eisenchlorid und dem Yttriumchlorid ausgewählt ist.

18. Verfahren nach einem der Ansprüche 15 bis 17, **dadurch gekennzeichnet, dass** die Lewis-Säure unter dem Zinkchlorid, dem Zinkbromid, dem Zinksulfat, dem Zinktetrafluoroborat, dem Zinnchlorid, dem Zinnbromid, den Zinkchlorid/Zinnchlorid-Gemischen, dem Nickelchlorid, dem Nickelbromid und dem Nickelacetylacetonat ausgewählt ist.

19. Verfahren nach einem der Ansprüche 1 bis 18, **dadurch gekennzeichnet, dass** die Lewis-Säure in einem Mengenanteil von 0 bis 50 mol und vorzugsweise von 0 bis 10 mol pro mol Übergangsmetallverbindung, insbesondere pro mol Nickelverbindung, vorliegt.

20. Verfahren nach einem der Ansprüche 1 bis 19, **dadurch gekennzeichnet, dass** der Anodenraum eine wässerige Lösung eines Anolyten enthält, der aus einer Säure, wie insbesondere der Schwefelsäure, der Salpetersäure, den in Wasser löslichen Carbonsäuren, wie Essigsäure, den entsprechenden Salzen, wie dem Natrium-, Kalium-, Ammonium- oder quartären Ammoniumsalz, oder aus einer Base, wie dem Natriumhydroxid oder dem Kaliumhydroxid besteht, wobei der Anolyt vorzugsweise unter der Schwefelsäure und ihren Salzen ausgewählt ist.

21. Verfahren nach einem der Ansprüche 1 bis 19, **dadurch gekennzeichnet, dass** der Anodenraum eine wässerige Lösung eines Anolyten enthält, der aus einem oder mehreren wasserlöslichen ein- oder zweizähnigen Phosphinen besteht.

22. Verfahren nach einem der Ansprüche 1 bis 21, **dadurch gekennzeichnet, dass** die Ausgangskonzentration des Anolyten in der Lösung des Anodenraums im Bereich von 10⁻³ mol/l bis 3 mol/l liegt.

23. Verfahren nach einem der Ansprüche 1 bis 22, **dadurch gekennzeichnet, dass** es darin besteht, im Kathodenraum eine wässerige Lösung eines gebrauchten Katalysators auf der Basis eines wasserlöslichen ein- oder zweizähnigen Phosphins und eines Übergangsmetalls, insbesondere von Nickel, der zumindest teilweise in sein Cyanid überführt wurde, einzusetzen, wobei dieser gebrauchte Katalysator gegebenenfalls auch eine oder mehrere Lewis-Säuren enthält und wobei die besagte Lösung relativ geringe Mengen an Verbindungen wie des Butadiens und/oder der Penten-Nitrile oder wie des Adiponitrils, des Methylglutaronitrils, des Ethylsuccinonitrils oder der Methylbuten-Nitrile enthalten kann.
